# EUROPÄISCHE PATENTSCHRIFT

(11) **EP 3 560 746 B1**
(45) Veröffentlichungstag und Bekanntmachung des Hinweises auf die Patenterteilung: **26.10.2022**
(21) Anmeldenummer: 19020303.4
(22) Anmeldetag: 23.04.2019
(51) Int. Cl.: B60K 28/06, G01C 21/36, B60K 35/00

(54) **ÜBERWACHUNGSVORRICHTUNG FÜR EIN KRAFTFAHRZEUG, KRAFTFAHRZEUG SOWIE EIN ZUGEHÖRIGES VERFAHREN**
MOTOR VEHICLE, MONITORING DEVICE FOR A MOTOR VEHICLE AND CORRESPONDING METHOD
DISPOSITIF DE SURVEILLANCE POUR UN VÉHICULE AUTOMOBILE, VÉHICULE AUTOMOBILE AINSI QUE PROCÉDÉ ASSOCIÉ

(30) Priorität: 24.04.2018 CZ 20180199
(43) Veröffentlichungstag der Anmeldung: 30.10.2019
(73) Patentinhaber: Skoda Auto a.s., 29301 Mladá Boleslav (CZ)
(72) Erfinder: WEBER, Norbert, 12000 Praha (CZ)

(56) Entgegenhaltungen:
- DE-A1-102017 115 317
- US-A1- 2006 267 781
- US-A1- 2012 078 509
- US-B2- 9 778 654

## Beschreibung

Die Erfindung betrifft eine Überwachungsvorrichtung für ein Kraftfahrzeug, ein Verfahren und ein mit der Überwachungsvorrichtung ausgestattetes Kraftfahrzeug.

Zur Unfallverhütung werden in Kraftfahrzeugen Überwachungsvorrichtungen eingebaut, welche es als Aufgabe haben, einen Müdigkeitszustand eines Fahrers des Kraftfahrzeugs zu erfassen. In der Regel wird ein Müdigkeitszustand des Fahrers entweder anhand vorbestimmter Körpermerkmale des Fahrers oder an seinem Fahrverhalten erkannt. Eine Auswertung der Körpermerkmale kann beispielsweise auf Grundlage des Pulses des Fahrers erfolgen. Basiert die Erkennung eines Müdigkeitszustands auf seinem Fahrverhalten, kann beispielsweise ein durch die Überwachungsvorrichtungen erfasstes Schwanken des Kraftfahrzeugs zwischen Fahrbahnbegrenzungslinien auf einen Müdigkeitszustand hinweisen. Wird ein Müdigkeitszustand des Fahrers erkannt, wird der Fahrer gewöhnlicherweise mittels eines Warnhinweises darauf hingewiesen. Der Warnhinweis beinhaltet in der Regel auch eine Aufforderung an den Fahrer, eine Pause einzulegen.

Ziel dieser Überwachungsvorrichtungen ist es, einen übermüdeten Fahrer von einem Führen des Kraftfahrzeugs abzuhalten und somit Unfälle zu verhüten. Um eine Pause einlegen zu können, ist es jedoch erforderlich, eine geeignete Stelle für das Einlegen der Pause zu finden. Insbesondere auf Autobahnen stellt die Suche nach einem geeigneten Rastplatz eine Schwierigkeit dar, weil nicht jeder Rastplatz für eine Pause geeignet ist. Besonders problematisch ist diese Situation für Lastwagenfahrer, weil nur wenige Rastplätze für Lastwagen ausgelegt sind. Zudem sind diese oft überfüllt.

Aus der US2006267781A1 ist bekannt, dass das Fahrzeugzustandsüberwachungssystem eine Überwachungseinheit des körperlichen Zustands, z.B. eine Kamera, ein Datenverarbeitungssystem, ein Navigationssystems und ein Kommunikationssystem umfasst. Die Zustandsüberwachungseinheit wird in einem Fahrzeug montiert, um mindestens ein physikalisches Merkmal eines Fahrzeugfahrers zu überwachen. Das Datenverarbeitungssystem vergleicht die von der Zustandsüberwachungseinheit erfassten Daten mit Regeln, die die Art der zu ergreifenden Maßnahmen angeben. Das Navigationssystem ermöglicht es dem Datenverarbeitungssystem, den Standort des Fahrzeugs zu bestimmen, und das Kommunikationssystem ermöglicht es dem Datenverarbeitungssystem, eine geeignete Stelle zu kontaktieren, wenn der physische Zustand des Fahrzeugfahrers einen solchen Kontakt rechtfertigt.

Aus der DE102017115317A1 bekannt, dass ein beispielhaftes Fahrzeug eine Kamera und eine Insassenüberwachung beinhaltet. Die beispielhafte Kamera ist an einem Rückspiegel des Fahrzeugs befestigt, um Schläfrigkeitsereignisse in Verbindung mit einem Fahrer zu detektieren. Die beispielhafte Insassenüberwachung dient dazu, als Reaktion auf Detektieren mit der Kamera eines ersten Schläfrigkeitsereignisses Feedback an einen Fahrer bereitzustellen.

Aus der US2012078509A1 ist bekannt, dass zur Steuerung eines Kraftfahrzeugs die Erkennung eines unsicheren Zustands gehört. Unsichere Zustände können sowohl der Fahrerzustand, der Fahrzeugzustand als auch die äußeren Bedingungen sein. Das Verfahren umfasst außerdem das Auffinden eines sicheren Bereichs und die automatische Bestimmung einer Route zu diesem sicheren Bereich. Ein Fahrer kann über die Route zum sicheren Bereich informiert werden.

Aus der US9778654B2 ist bekannt, dass ein System einen ersten Sensor zur Erfassung von Fahrzeugdaten und einen zweiten Sensor zur Erfassung von Fahrerdaten umfasst. Das System umfasst auch einen Speicher zum Speichern der bevorzugten Haltestellen und eine GPS-Einheit zur Erkennung eines Ortes. Das System umfasst auch eine elektrische Steuereinheit (ECU ), die einen Müdigkeitswert des Fahrers auf der Grundlage der Fahrzeugleistungsdaten und der Fahrerzustandsdaten ermitteln kann.

Es ist eine Aufgabe der Erfindung, einem Fahrer eines Kraftfahrzeugs das Finden einer geeigneten Raststelle zu erleichtern.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung wird eine Überwachungsvorrichtung für ein Kraftfahrzeug bereitgestellt. Diese umfasst eine Sensoreinrichtung und ein Navigationsgerät. Die Sensoreinrichtung ist dazu eingerichtet, einen vorbestimmten Müdigkeitszustand eines Fahrers des Kraftfahrzeugs mittels einer Erfassung zumindest eines vorbestimmten Körpermerkmals des Fahrers des Kraftfahrzeugs und/oder einer vorbestimmten Bewegungscharakteristik des Kraftfahrzeugs zu erkennen. Die Sensoreinrichtung ist eingerichtet, bei dem Erkennen des Müdigkeitszustands des Fahrers ein Steuersignal an das Navigationsgerät zu versenden. Das Navigationsgerät ist dazu eingerichtet, bei Empfang des Steuersignals ein für den Müdigkeitszustand vorgesehenes Zielobjekt zu ermitteln und einen Fahrweg von einer aktuellen geographischen Fahrzeugposition des Kraftfahrzeugs zu einer geographischen Zielposition des vorgesehenen Zielobjekts zu berechnen.

Der vorbestimmte Müdigkeitszustand des Fahrers wird durch die Sensoreinrichtung erkannt. Zu diesem Zweck ist die Sensoreinrichtung dazu eingerichtet, das vorbestimmte Körpermerkmal des Fahrers des Kraftfahrzeugs zu erfassen, welches eine Müdigkeit indiziert. Zusätzlich oder alternativ dazu ist die Sensoreinrichtung dazu eingerichtet, den Müdigkeitszustand mittels eines Erfassens der vorbestimmten Bewegungscharakteristik des Kraftfahrzeugs zu erkennen. Die Überwachungsvorrichtung ist dazu eingerichtet, das Steuersignal an das Navigationsgerät zu versenden, sobald es den Müdigkeitszustand erkannt hat. Das Navigationsgerät ist dazu eingerichtet, das für den Müdigkeitszustand vorgesehene Zielobjekt zu bestimmen und den Fahrweg zu berechnen, welcher von der aktuellen geografischen Zielposition des Kraftfahrzeugs zu der geografischen Zielposition des vorgesehenen Zielobjekts verläuft.

Durch die Erfindung ergibt sich der Vorteil, dass für den Fahrer im Fall eines erkannten Müdigkeitszustands eine geeignete Zielposition zum Einlegen einer Pause bereitgestellt wird.

Die Sensoreinrichtung kann beispielsweise eine Kamera aufweisen, welche auf den Fahrer des Kraftfahrzeugs gerichtet ist. Die Sensoreinrichtung kann einen Mikroprozessor aufweisen, welcher dazu eingerichtet ist, das vorbestimmte Körpermerkmal an dem Fahrer zu erfassen. Bei dem vorbestimmten Körpermerkmal kann es sich beispielsweise um eine vorbestimmte Augenschließfrequenz handeln. Die Sensoreinrichtung kann zusätzlich oder alternativ dazu eine Kamera aufweisen, welche in Fahrtrichtung ausgerichtet ist und den Bereich vor dem Kraftfahrzeug erfasst. Der Mikroprozessor kann dazu eingerichtet sein, beispielsweise Fahrstreifen- oder Straßenbegrenzungen zu erfassen. Mittels der Erfassung der Fahrstreifen- oder Straßenbegrenzungen kann der Mikroprozessor die Bewegung des Kraftfahrzeugs auf der Straße berechnen und die vorbestimmte Bewegungscharakteristik des Kraftfahrzeugs erfassen. Bei der vorbestimmten Bewegungscharakteristik kann es sich beispielsweise um einen zu geringen Abstand zu einer der Fahrstreifen- oder Straßenbegrenzungen oder um ein Fahren von Schlangenlinien handeln. Die Sensoreinrichtung kann dazu eingerichtet sein, bei dem Erfassen der vorbestimmten Bewegungscharakteristik und/oder den vorbestimmten Körpermerkmalen des Fahrers den Müdigkeitszustand zu erkennen und in diesem Fall das Steuersignal an das Navigationsgerät zu senden. Das Navigationsgerät kann beispielsweise ein Rechner mit einem Mikroprozessor sein, welcher eine Anzeigevorrichtung zur Darstellung von Karten aufweist und dazu eingerichtet ist, die aktuelle geographische Fahrzeugposition des Kraftfahrzeugs aus empfangenen Daten eines geographischen, satellitenbasierten Positionierungssystem wie beispielsweise GPS oder Galileo zu berechnen. Das Navigationsgerät kann dazu eingerichtet sein, die aktuelle geographische Fahrzeugposition des Kraftfahrzeugs auf der Anzeigevorrichtung darzustellen. Das Navigationsgerät kann dazu eingerichtet sein, bei Empfang des Steuersignals der Überwachungsvorrichtung, das für den Müdigkeitszustand vorgesehene Zielobjekt zu ermitteln und den Fahrweg von der aktuellen geographischen Fahrzeugposition des Kraftfahrzeugs zu der geographischen Zielposition des Zielobjekts zu berechnen. Das für den Müdigkeitszustand vorgesehene Zielobjekt kann beispielsweise ein Parkplatz sein, welcher in einer Datenbank des Navigationsgerät mit der jeweiligen geographischen Position gespeichert sein kann. Das Ermitteln kann der Art erfolgen, dass das Zielobjekt der Parkplatz in der Datenbank ist, dessen geografische Position die kleinste örtliche Distanz aller in der Datenbank gespeicherten Parkplätze zu der aktuellen geographischen Fahrzeugposition aufweist. Alternativ dazu kann das Zielobjekt das zeitlich am schnellsten zu erreichende Objekt in der Datenbank sein. Die Berechnung des Fahrwegs kann mittels eines bekannten Verfahrens nach dem Stand der Technik erfolgen und beispielsweise den kürzesten oder schnellsten Fahrweg zu der geographischen Zielposition des Zielobjekts ausgeben.

In der Erfindung sieht die Überwachungsvorrichtung vor, dass das Navigationsgerät dazu eingerichtet ist, nach Empfang des Steuersignals zumindest für einen vorbestimmten Zeitraum ein Warnsignal auszugeben. Das Warnsignal kann beispielsweise ein akustisches Signal, ein Objekt auf der Anzeigevorrichtung oder eine Vibration eines Lenkrads oder Sitzes des Kraftfahrzeugs sein. Dadurch ergibt sich der Vorteil, dass der Fahrer über ein Erkennen des Müdigkeitszustands informiert wird. Es kann vorgesehen sein, dass neben einer dargestellten Karte auf der Anzeigevorrichtung des Navigationsgeräts ein Piktogramm oder ein Text als Warnsignal angezeigt wird, und den Fahrer über den erkannten Müdigkeitszustand informiert.

In der Erfindung sieht die Überwachungsvorrichtung vor, dass das Navigationsgerät dazu eingerichtet ist, bei einer vorbestimmten Benutzereingabe während der Ausgabe des Warnsignals einen Navigationsmodus zur Navigation entlang des Fahrwegs einzuleiten. Mit anderen Worten ist das Navigationsgerät dazu eingerichtet, auf die vorbestimmte Benutzereingabe während der Ausgabe des Warnsignals zu reagieren, indem es den Navigationsmodus aktiviert, welcher den Fahrer entlang des Fahrwegs zu dem vorgesehenen Zielobjekt führt. Dadurch ergibt sich der Vorteil, dass der Navigationsmodus zur Navigation zum Zielobjekt durch die vorbestimmte Benutzereingabe eingeleitet werden kann, ohne dass der Fahrer das vorgesehene Zielobjekt manuell auswählen muss. Es kann beispielsweise vorgesehen sein, dass das Navigationsgerät den Navigationsmodus zur Navigation entlang des Fahrwegs zu dem Zielobjekt einleitet, wenn der Fahrer während der Anzeige des Warnsignals eine vorbestimmte Taste betätigt oder einen vorbestimmten Sprachbefehl spricht.

Eine Weiterbildung der Erfindung sieht vor, dass das Navigationsgerät eine Anzeigevorrichtung umfasst und dazu eingerichtet ist, nach Empfang des Steuersignals den Fahrweg zumindest für einen vorbestimmten Zeitraum auf der Anzeigevorrichtung anzuzeigen. Mit anderen Worten ist das Navigationsgerät dazu eingerichtet, den berechneten Fahrweg zu der Zielposition auf der Anzeigevorrichtung des Navigationsgeräts anzuzeigen. Die Anzeige erfolgt dabei zumindest für einen vorbestimmten Zeitraum. Durch die Erfindung ergibt sich der Vorteil, dass dem Fahrer der Fahrweg zum Zielobjekt automatisch angezeigt wird. Es kann beispielsweise vorgesehen sein, dass das Navigationsgerät einen LCD-Bildschirm als Anzeigevorrichtung aufweist, auf welchem eine Umgebungskarte angezeigt wird. In der Umgebungskarte kann nach dem Empfang des Steuersignals der Fahrweg von der aktuellen geographischen Fahrzeugposition zu der geographischen Zielposition des vorgesehenen Zielobjekts dargestellt werden.

Eine Weiterbildung der Erfindung sieht vor, dass das Navigationsgerät dazu eingerichtet ist, den Navigationsmodus zu beenden, wenn es ein vorbestimmtes Fahrmanöver des Kraftfahrzeugs erfasst. Mit anderen Worten ist das Navigationsgerät dazu eingerichtet, die Navigation entlang des Fahrwegs zu dem Zielobjekt abzubrechen, wenn das Navigationsgerät erfasst, dass durch das Kraftfahrzeug das vorbestimmte Fahrmanöver durchführt wird. Dadurch ergibt sich der Vorteil, dass durch den Fahrer keine Benutzereingabe erfolgen muss, um den Navigationsmodus zu beenden. Es kann beispielsweise vorgesehen sein, dass das Navigationsgerät den Navigationsmodus entlang des Fahrwegs beendet, wenn das Kraftfahrzeug an dem Zielobjekt vorbeigefahren ist.

Eine Weiterbildung der Erfindung sieht vor, dass das Navigationsgerät dazu eingerichtet ist, das vorgesehene Zielobjekt aus einer Objektdatenbank zu ermitteln, wobei die Objektdatenbank potentielle Zielobjekte mit einer jeweiligen geographischen Zielposition umfasst und die geographische Zielposition des daraus ausgewählten vorgesehenen Zielobjekts eine minimale Distanz zu der aktuellen geographischen Fahrzeugposition des Kraftfahrzeugs aufweist. Mit anderen Worten ist das Navigationsgerät dazu eingerichtet, aus der Objektdatenbank, in welcher die potentiellen Zielobjekte zusammen mit jeweiligen geographischen Positionen gespeichert sind, das vorgesehenen Zielobjekt zu bestimmen. Die Zielposition des vorgesehenen Zielobjekt weist dabei die minimale Distanz zu der aktuellen geographischen Fahrzeugposition des Kraftfahrzeug auf. Dadurch ergibt sich der Vorteil, dass das Navigationsgerät automatisch das nächstgelegene Zielobjekt für den Fahrer auswählt. Es kann beispielsweise vorgesehen sein, dass die Objektdatenbank in dem Navigationsgerät gespeichert ist und die potentiellen Zielobjekte zusammen mit deren jeweiliger geographischen Position als Einträge enthält. Die Datenbank kann beispielsweise auf einem magnetischen Speicherelement gespeichert sein. Empfängt das Navigationsgerät das Steuersignal, kann es vorgesehen sein, dass dieses automatisch das vorgesehene Zielobjekt auswählt, welches die geringste Distanz zu der aktuellen geographischen Kraftfahrzeugposition aufweist.

Eine Weiterbildung der Erfindung sieht vor, dass das Navigationsgerät dazu eingerichtet ist, die potentiellen Zielobjekte aus einer Menge von Zielobjekten zu wählen, welche jeweils ein vorbestimmtes Benutzerkriterium erfüllen. Mit anderen Worten ist das Navigationsgerät dazu eingerichtet, die potentiellen Zielobjekte aus der Objektdatenbank zu ermitteln, wobei bei der Auswahl der potentiellen Zielobjekte nur solche Zielobjekte berücksichtigt werden, welche ein vorbestimmtes Benutzerkriterium erfüllen. Dadurch ergibt sich der Vorteil, dass es dem Fahrer ermöglicht wird, Präferenzen bei der Auswahl des Zielobjekts festzulegen. Es kann beispielsweise vorgesehen sein, dass der Benutzer die Anwesenheit einer Tankstelle, eines Lokals, einer Schlafmöglichkeit oder einer Dusche als Benutzerkriterium einstellt. Empfängt das Navigationsgerät das Steuersignal können beispielsweise lediglich solche Zielobjekte bei der Ermittlung des vorgesehenen Zielobjekts verwendet werden, welche das vorbestimmte Benutzerkriterium erfüllen. Die anderen Zielobjekte, welche das Benutzerkriterium nicht erfüllen, können bei einem Auswahlverfahren unberücksichtigt bleiben. Hierfür kann es vorgesehen sein, dass den Zielobjekten in der Objektdatenbank bestimmte Merkmale, welche als Benutzerkriterium gewählt werden können, zugewiesen sind. Dadurch kann es sich ergeben, dass ein Zielobjekt, dessen Zielposition die minimale Distanz zu der aktuellen geografischen Fahrzeugposition aufweist, unberücksichtigt bleibt, weil es das Benutzerkriterium nicht erfüllt. Dies hat zur Folge, dass das vorgesehene Zielobjekt das potentielle Zielobjekte ist, welches das vorbestimmte Benutzerkriterium erfüllt, und die minimale Distanz zu der aktuellen geografischen Fahrzeugposition aufweist.

Eine Weiterbildung sieht vor, dass das Navigationsgerät dazu eingerichtet ist, bei Empfang des Steuersignals, einen jeweiligen Zustandswert betreffend ein potentielles Zielobjekt abzurufen. Mit anderen Worten ist das Navigationsgerät dazu eingerichtet, einen Zustandswert, welcher sich auf ein potentielles Zielobjekt bezieht, bei dem Empfang des Steuersignals abzurufen. Dadurch ergibt sich der Vorteil, dass es möglich ist, zu überprüfen, ob ein potentielles Zielobjekt aktuell als vorgesehenes Zielobjekt geeignet ist. Es kann beispielsweise vorgesehen sein, dass das Navigationsgerät dazu eingerichtet ist, bei Empfang des Steuersignals Zustandswerte betreffend einer aktuellen Verfügbarkeit von Parkplätzen oder Schlafmöglichkeiten an den potentiellen Zielobjekten von einem Zentralrechner abzurufen. Bei der Ermittlung des vorgesehenen Zielobjekts aus den potentiellen Zielobjekten kann es vorgesehen sein, dass nur solche potentielle Zielobjekte berücksichtigt werden, welche einen vorbestimmten Zustandswert aufweisen. Es kann beispielsweise vorgesehen sein, dass nur solche potentielle Zielobjekte berücksichtigt werden, welche noch freie Parkmöglichkeiten aufweisen. Die Anzahl der freien Parkmöglichkeiten kann ein solcher Zustandswert sein.

Die Erfindung umfasst auch ein Kraftfahrzeug mit einer Überwachungsvorrichtung.

Die Erfindung umfasst ferner ein Verfahren zum Betreiben einer Überwachungsvorrichtung für ein Kraftfahrzeug. In dem Verfahren ist es vorgesehen, dass durch eine Sensoreinrichtung der Überwachungsvorrichtung ein vorbestimmter Müdigkeitszustand eines Fahrers des Kraftfahrzeugs mittels einer Erfassung zumindest eines vorbestimmten Körpermerkmals des Fahrers des Kraftfahrzeugs und/oder einer vorbestimmten Bewegungscharakteristik des Kraftfahrzeugs erkannt wird. Daraufhin wird durch die Sensoreinrichtung das Steuersignal an das Navigationsgerät versandt. Bei Empfang des Steuersignals durch das Navigationsgerät wird durch das Navigationsgerät ein für den Müdigkeitszustand vorgesehenes Zielobjekt ermittelt. Durch das Navigationsgerät wird ein Fahrweg von einer aktuellen geographischen Fahrzeugposition des Kraftfahrzeugs zu einer geographischen Zielposition eines Zielobjekts berechnet. Bei Empfang des Steuersignals wird durch das Navigationsgerät zumindest für einen vorbestimmten Zeitraum ein Warnsignal ausgegeben. Bei einer vorbestimmten Benutzereingabe während der Ausgabe des Warnsignals wird durch das Navigationsgerät einen Navigationsmodus zur Navigation entlang des Fahrwegs eingeleitet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer Ausführungsform der Anzeigevorrichtung des erfindungsgemäßen Navigationsgeräts, wie sie in dem Kraftfahrzeug von Fig. 1 bereitgestellt sein kann;
- Fig. 3: eine schematische Darstellung einer Ausführungsform des Warnsignals; und
- Fig. 4: eine schematische Darstellung einer Ausführungsform des erfindungsgemäßen Verfahrens.

Bei dem im Folgenden erläuterten Ausführungsbeispiel handelt es sich um eine bevorzugte Ausführungsform der Erfindung.

Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

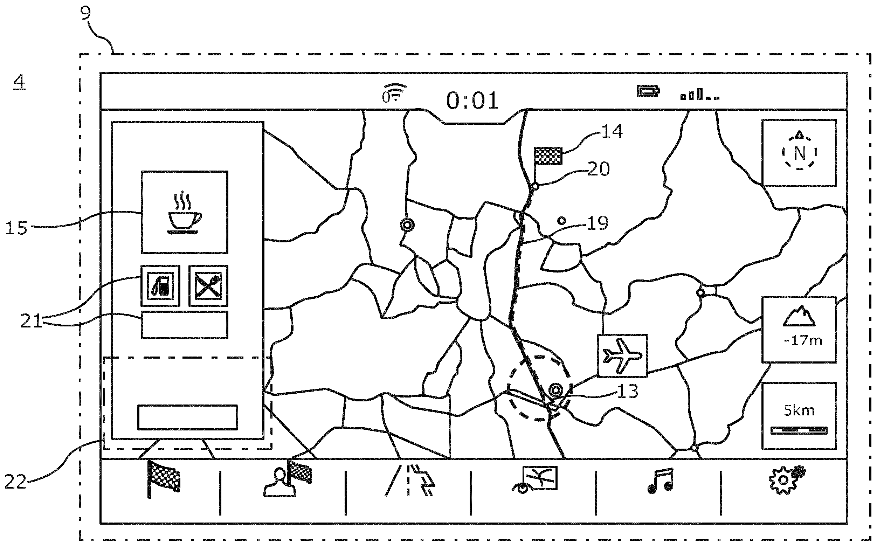

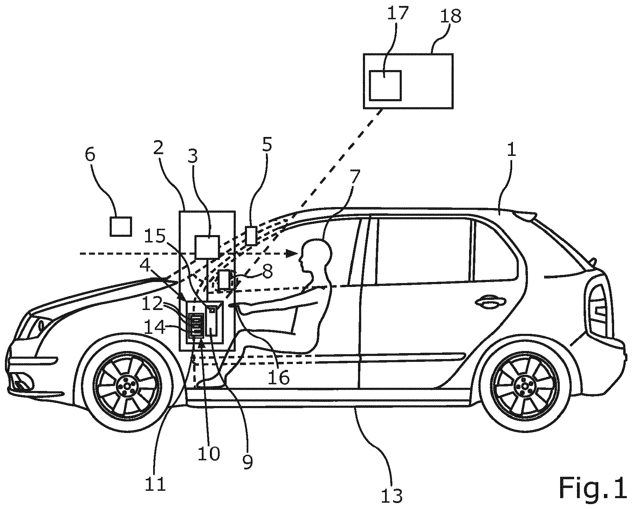

Fig. 1 zeigt eine schematische Darstellung einer Ausführungsform des erfindungsgemäßen Kraftfahrzeugs. Das Kraftfahrzeug 1 kann beispielsweise ein Personenkraftwagen oder ein Lastkraftwagen sein. Das Kraftfahrzeug 1 kann die erfindungsgemäße Überwachungsvorrichtung 2 aufweisen. Die Überwachungsvorrichtung 2 kann die Sensoreinrichtung 3 und das Navigationsgerät 4 umfassen. Die Sensoreinrichtung 3 kann dazu eingerichtet sein, den Müdigkeitszustand des Fahrers des Kraftfahrzeugs 1 zu erkennen. Dies kann beispielsweise mittels einer Erfassung des vorbestimmten Körpermerkmals 5 oder der vorbestimmten Bewegungscharakteristik des Kraftfahrzeugs 6 erfolgen. Für die Erfassung des vorbestimmten Körpermerkmals 5 kann die Sensoreinrichtung 3 beispielsweise eine auf den Fahrer 7 des Kraftfahrzeugs gerichtete Kamera umfassen oder Sensoren, welche den Fahrer 7 berühren. Die Sensoren können beispielsweise einen Puls, eine Augenschließfrequenz oder eine Körpertemperatur des Fahrers erfassen. Das vorbestimmte Körpermerkmal 5 kann beispielsweise ein vorbestimmter Puls oder eine vorbestimmte Augenschließfrequenz sein. Es kann beispielsweise vorgesehen sein, dass der Müdigkeitszustand durch die Sensoreinrichtung 3 des Fahrers 7 erkannt wird, wenn die Augenschließfrequenz einen vorbestimmten Wert überschreitet. Es kann vorgesehen sein, dass die Sensoreinrichtung 3 dazu eingerichtet ist, die Bewegungscharakteristik 6 des Kraftfahrzeugs 1 zu erfassen. Beispielsweise kann die Sensoreinrichtung 3 eine Kamera aufweisen, welche dazu eingerichtet ist, Fahrbahnbegrenzungsstreifen zu erfassen. Wird die vorbestimmte Bewegungscharakteristik 6, wobei es sich beispielsweise um ein Unterschreiten einer Distanz zu einem Fahrbahnbegrenzungsstreifen handeln kann, erfasst, wird auf einen Müdigkeitszustand des Fahrers geschlossen. Die Sensoreinrichtung 3 kann dazu eingerichtet sein, bei einem Erkennen des Müdigkeitszustands des Fahrers das Steuersignal 8 an das Navigationsgerät 4 zu senden. Das Steuersignal 8 kann beispielsweise ein elektrisches oder optisches Signal sein. Das Navigationsgerät 4 kann beispielsweise einen Mikroprozessor und die Anzeigevorrichtung 9 umfassen. Das Navigationsgerät 4 kann eine Speichereinheit 10 aufweisen, in welcher die Objektdatenbank 11 mit den potentiellen Zielobjekten 12 gespeichert sein kann. Die Speichereinheit 10kann beispielsweise ein Flashspeicher sein. Es kann sein, dass jedem der potentiellen Zielobjekte 12 geographische Positionen zugeordnet sein können. Das Navigationsgerät kann dazu eingerichtet sein, mittels der Auswertung von Satellitensignalen, die aktuelle geographische Fahrzeugposition des Kraftfahrzeugs 13 zu berechnen. Es kann vorgesehen sein, dass das Navigationsgerät 4 bei dem Empfang des Steuersignals 8 aus der Objektdatenbank 11 das vorgesehene Zielobjekt 14 ermittelt, welches eine minimale Distanz zu der aktuellen geographischen Fahrzeugposition des Kraftfahrzeugs 13 aufweist. Nach dem Empfang des Steuersignals 8 wird ein Warnsignal 15 auf der Anzeigevorrichtung 9 des Navigationsgeräts angezeigt. Das Warnsignal 15 wird für einen bestimmten Zeitraum angezeigt. Der Navigationsmodus zur Navigation entlang des zu dem vorgesehenen Zielobjekt 14 berechneten Fahrweg 19 wird eingeleitet, wenn während der Anzeige des Warnsignals 15 eine vorbestimmte Benutzereingabe 16 erfolgt. Es kann sein, dass zu diesem Zweck die Anzeigevorrichtung 9 des Navigationsgeräts 4 als berührungssensitive Oberfläche gestaltet ist und die Benutzereingabe 16 ein Eintippen oder eine Wischgeste auf der Anzeigevorrichtung 9 umfasst. Es kann vorgesehen sein, dass das Navigationsgerät 4 derart gestaltet ist, dass der Fahrer 7 beispielsweise ein vorbestimmtes Benutzerkriterium definieren kann, welches bei der Wahl der potentiellen Zielobjekte 12 berücksichtigt wird. Dabei kann es sich beispielsweise um eine Anwesenheit einer Tankstelle handeln. Dies hat zur Folge, dass das durch das Navigationsgerät 4 ermittelte vorgesehene Zielobjekt 14 eine Tankstelle aufweisen muss. Das Navigationsgerät 4 kann dazu eingerichtet sein, einen jeweiligen Zustandswert 17 eines jeweiligen potentiellen Zielobjektes 12 von einem Zentralrechner 18 abzurufen. Dabei kann es sich beispielsweise um einen Zustandswert 17 handeln, welcher die Anzahl der verfügbaren freien Parkflächen angibt.

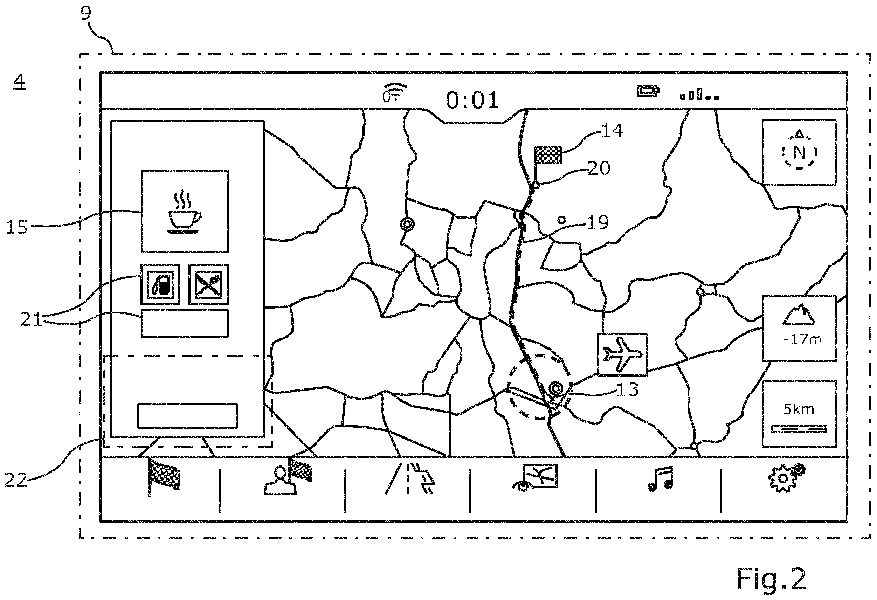

Fig. 2 zeigt eine schematische Darstellung einer Ausführungsform der Anzeigevorrichtung des erfindungsgemäßen Navigationsgeräts, wie sie in dem Kraftfahrzeug von Fig. 1 bereitgestellt sein kann. Die Anzeigevorrichtung 9 des Navigationsgeräts 4 kann beispielsweise ein LCD-Bildschirm sein. Auf der Anzeigevorrichtung 9 kann eine Karte angezeigt werden. Die Karte kann die aktuelle geographische Fahrzeugposition des Kraftfahrzeugs 13 anzeigen. Ist der Müdigkeitszustand des Fahrers 7 erkannt und ein vorgesehenes Zielobjekt 14 ermittelt, kann es vorgesehen sein, dass der Fahrweg 19, welcher die aktuelle geographische Fahrzeugposition des Kraftfahrzeugs 13 mit der geographischen Zielposition des vorgesehenen Zielobjekts 20 verbindet, in der Karte dargestellt wird. Der Fahrweg 19 kann beispielsweise die kürzeste oder die schnellste Strecke zwischen den beiden Positionen 13,20 sein. Die Anzeigevorrichtung 9 kann dazu eingerichtet sein, das Warnsignal 15 anzuzeigen. Dabei kann es sich beispielsweise um einen Text und/oder ein Piktogramm handeln. Es kann vorgesehen sein, dass auf der Anzeigevorrichtung 9 Informationen betreffend das vorgesehene Zielobjekt 21 angezeigt werden. Dabei kann es sich beispielsweise um Piktogramme handeln, welche eine Tank- oder Speisemöglichkeit an dem vorgesehenen Zielobjekt 14 symbolisieren. Auf der Anzeigevorrichtung 9 kann auch ein Bereich angezeigt werden, welcher als Interaktionsfläche 22 zur Einleitung des Navigationsmodus dient. Es kann vorgesehen sein, dass der Navigationsmodus gestartet wird, wenn die vorbestimmte Benutzereingabe 16 in Form einer Berührung der Interaktionsfläche 22 erfolgt.

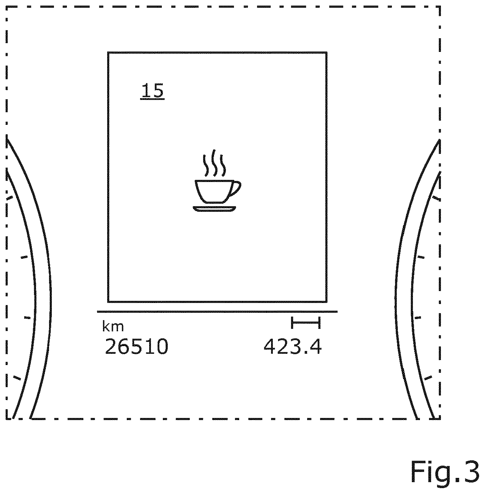

Fig. 3 zeigt eine schematische Darstellung einer Ausführungsform des Warnsignals. Das Warnsignal 15 kann beispielsweise in einem Kombiinstrument des Kraftfahrzeugs 1 dargestellt werden und als Kaffeetasse gestaltet sein.

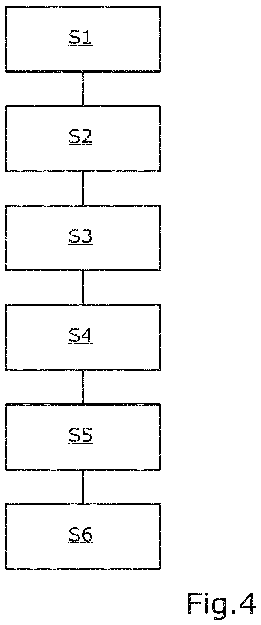

Fig. 4 zeigt eine schematische Darstellung einer Ausführungsform des erfindungsgemäßen Verfahrens. In einem ersten Schritt S1 kann die Sensoreinrichtung 3 der Überwachungsvorrichtung 2 das vorbestimmte Körpermerkmal 5 und/oder die vorbestimmte Bewegungscharakteristik 6 des Kraftfahrzeugs erfassen. In einem zweiten Schritt S2 kann die Sensoreinrichtung 3 den vorbestimmten Müdigkeitszustand des Fahrers des Kraftfahrzeugs 7 erkennen. In einem dritten Schritt S3 kann die Sensoreinrichtung 3 das Steuersignal 8 an das Navigationsgerät 4 senden. In einem vierten Schritt S4 kann das Navigationsgerät 4 der Überwachungsvorrichtung 2 das Steuersignal 8 empfangen und das vorgesehene Zielobjekt 14 ermitteln. Das Ermitteln des vorgesehenen Zielobjekts 14 kann durch ein Abrufen und analysieren von potentiellen Zielobjekten 12 aus der Objektdatenbank 11 erfolgen, wobei das vorgesehene Zielobjekt eine minimale Distanz zu der aktuellen geographischen Fahrzeugposition des Kraftfahrzeugs 13 aufweisen kann und dem vorbestimmten Benutzerkriterium genügt. In einem fünften Schritt S5 kann das Navigationsgerät 4 den Fahrweg 19 von der aktuellen geographischen Fahrzeugposition des Kraftfahrzeugs 13 zu der geographischen Zielposition des Zielobjekts 20 berechnen. In einem sechsten Schritt S6 kann es vorgesehen sein, dass der Fahrweg 19 zum vorgesehenen Zielobjekt 14 zeitgleich mit dem Warnsignal 15 auf der Anzeigevorrichtung 9 des Navigationsgeräts 4 angezeigt wird. Es kann sein, dass die Interaktionsfläche 22 auf der Anzeigevorrichtung 9 dargestellt wird. Erfolgt die vorbestimmte Benutzereingabe 16, beispielsweise durch ein Antippen der Interaktionsfläche 22 wird der Navigationsmodus gestartet. Das vorgesehene Zielobjekt 14 kann beispielsweise als Zwischenziel einer ursprünglichen Fahrstrecke des Kraftfahrzeugs 1 angefahren werden. Wird der Navigationsmodus nicht durch die vorbestimmte Benutzereingabe 16 aktiviert, wird der Fahrweg 19 zumindest für eine vorbestimmte Zeit auf der Anzeigevorrichtung 9 angezeigt. Es kann sein, dass der Fahrweg 19 nicht verfolgt wird, sondern als Linienhinweis weiterhin auf der Anzeigevorrichtung 9 verbleibt, bis die Sensoreinrichtung 3 erfasst, dass das Kraftfahrzeug 1 an dem vorgesehenen Zielobjekt 14 vorbeifährt. Alternativ kann es vorgesehen sein, dass der Fahrweg 19 auf der Anzeigevorrichtung 9 als sogenannte passive Linie angezeigt wird, welche der Fahrer des Kraftfahrzeugs 7 bis zu dem vorgesehenen Zielobjekt 14 folgen kann. Erfolgt ein vorbestimmtes Fahrmanöver, wie beispielsweise ein Vorbeifahren an dem vorgesehenen Zielobjekt 14, kann die Darstellung des Fahrwegs auf der Anzeigevorrichtung 9 beendet werden.

## Patentansprüche

1. Überwachungsvorrichtung (2) für ein Kraftfahrzeug (1), umfassend eine Sensoreinrichtung (3) und ein Navigationsgerät (4), wobei
- die Sensoreinrichtung (3) dazu eingerichtet ist, einen vorbestimmten Müdigkeitszustand eines Fahrers des Kraftfahrzeugs (7) mittels einer Erfassung zumindest eines vorbestimmten Körpermerkmals (5) des Fahrers und/oder einer vorbestimmten Bewegungscharakteristik (6) des Kraftfahrzeugs zu erkennen, und wobei
- die Sensoreinrichtung (3) dazu eingerichtet ist, bei Erkennen des Müdigkeitszustands des Fahrers des Kraftfahrzeugs (7) ein Steuersignal (8) an das Navigationsgerät (4) zu versenden, und
- das Navigationsgerät (4) dazu eingerichtet ist, bei Empfang des Steuersignals (8) ein für den Müdigkeitszustand vorgesehenes Zielobjekt (14) zu ermitteln und einen Fahrweg (19) von einer aktuellen geografischen Fahrzeugposition des Kraftfahrzeugs (13) zu einer geografischen Zielposition des vorgesehen Zielobjekts (20) zu berechnen,
**dadurch gekennzeichnet, dass**
das Navigationsgerät (4) dazu eingerichtet ist, nach Empfang des Steuersignals (8) zumindest für einen vorbestimmten Zeitraum ein Warnsignal (15) auszugeben, und wobei
das Navigationsgerät (4) dazu eingerichtet ist, bei einer vorbestimmten Benutzereingabe (16) während der Ausgabe des Warnsignals (15) einen Navigationsmodus zur Navigation entlang des Fahrwegs (19) einzuleiten.

2. Überwachungsvorrichtung (2) nach Anspruch 1, **dadurch gekennzeichnet, dass** das Navigationsgerät (4) eine Anzeigevorrichtung (9) umfasst und dazu eingerichtet ist, nach Empfang des Steuersignals (8) den Fahrweg (19) zumindest für einen vorbestimmten Zeitraum auf der Anzeigevorrichtung (9) anzuzeigen.

3. Überwachungsvorrichtung (2) nach Anspruch 1 oder 2, **dadurch gekennzeichnet, dass**
das Navigationsgerät (4) dazu eingerichtet ist, den Navigationsmodus zu beenden, wenn das Navigationsgerät (4) ein vorbestimmtes Fahrmanöver erfasst, und wobei das Navigationsgerät den Navigationsmodus entlang des Fahrwegs beendet, wenn das Kraftfahrzeug an dem Zielobjekt vorbeigefahren ist.

4. Überwachungsvorrichtung (2) nach einem der vorhergehenden Ansprüche, **dadurch gekennzeichnet, dass** das Navigationsgerät (4) dazu eingerichtet ist, das vorgesehene Zielobjekt (14) aus einer Objektdatenbank (11) zu ermitteln, wobei
- die Objektdatenbank (11) potentielle Zielobjekte (12) mit einer jeweiligen geografischen Zielposition umfasst, und
- die geografische Zielposition des daraus ausgewählten vorgesehenen Zielobjekts (20) eine minimale Distanz zu der aktuellen geografischen Fahrzeugposition des Kraftfahrzeugs (13) aufweist.

5. Überwachungsvorrichtung (2) nach Anspruch 4, **dadurch gekennzeichnet, dass** das Navigationsgerät (4) dazu eingerichtet ist, die potentiellen Zielobjekte (12) aus einer Menge von Zielobjekten zu wählen, welche jeweils ein vorbestimmtes Benutzerkriterium erfüllen.

6. Überwachungsvorrichtung (2) nach Anspruch 4 oder 5, **dadurch gekennzeichnet, dass** das Navigationsgerät (4) dazu eingerichtet ist, bei Empfang des Steuersignals (8) einen jeweiligen Zustandswert (17) der potentiellen Zielobjekte (12) abzurufen.

7. Kraftfahrzeug (1) umfassend eine Überwachungsvorrichtung (2) nach einem der vorhergehenden Ansprüche.

8. Verfahren zum Betreiben einer Überwachungsvorrichtung (2) für ein Kraftfahrzeug (1), wobei
- durch eine Sensoreinrichtung (3) der Überwachungsvorrichtung (2) ein vorbestimmter Müdigkeitszustand eines Fahrers des Kraftfahrzeugs (7) mittels einer Erfassung zumindest eines vorbestimmten Körpermerkmals (5) des Fahrers und/oder einer vorbestimmten Bewegungscharakteristik (6) des Kraftfahrzeugs erkannt wird,
- durch die Sensoreinrichtung (3) ein Steuersignal (8) an das Navigationsgerät (4) versandt wird,
- durch das Navigationsgerät (4) bei Empfang des Steuersignals (8) ein für den Müdigkeitszustand vorgesehenes Zielobjekt (14) ermittelt wird, und
- durch das Navigationsgerät (4) ein Fahrweg (19) von einer aktuellen geografischen Fahrzeugposition des Kraftfahrzeugs (13) zu einer geografischen Zielposi-tion eines Zielobjekts (20) berechnet und,
durch das Navigationsgerät (4) bei Empfang des Steuersignals (8) zumindest für einen vorbestimmten Zeitraum ein Warnsignal (15) ausgegeben wird, und
durch das Navigationsgerät (4), bei einer vorbestimmten Benutzereingabe (16) während der Ausgabe des Warnsignals (15), einen Navigationsmodus zur Navigation entlang des Fahrwegs (19) eingeleitet wird.

## Claims

1. A monitoring device (2) for a motor vehicle (1), comprising a sensor device (3) and a navigation device (4), wherein
- the sensor device (3) is configured to detect a predetermined state of fatigue of a driver of the motor vehicle (7) by means of a recording of at least one predetermined body feature (5) of the driver and/or one predetermined motion characteristic (6) of the motor vehicle, and wherein
- the sensor device (3) is configured to send a control signal (8) to the navigation device (4) when the state of fatigue of the driver of the motor vehicle (7) is detected, and
- the navigation device (4) is configured to determine a target object (14) intended for the state of fatigue when the control signal (8) is received and to calculate a travel route (19) from a current geographical vehicle position of the motor vehicle (13) to a geographical target position of the intended target object (20),
**characterized in that**
the navigation device (4) is configured to output a warning signal (15) after receiving the control signal (8) at least for one predetermined time period, and wherein
the navigation device (4) is configured to introduce a navigation mode for navigating along the travel path (19) in the event of a predetermined user input (16) during the output of the warning signal (15).

2. The monitoring device (2) according to claim 1, **characterized in that** the navigation device (4) comprises a display device (9) and is configured to display the travel route (19) at least for a predetermined time period on the display device (9) when the control signal (8) is received.

3. The monitoring device (2) according to claim 1 or 2, **characterized in that**
the navigation device (4) is configured to end the navigation mode when the navigation device (4) records a predetermined driving maneuver, and
wherein the navigation device ends the navigation mode along the travel route, if the motor vehicle has driven past the target object.

4. The monitoring device (2) according to any one of the preceding claims,
**characterized in that** the navigation device (4) is configured to determine the intended target object (14) from an object database (11), wherein
- the object database (11) comprises potential target objects (12) with a respective geographical target position, and
- the geographical target position of the intended target object (20) selected therefrom has a minimum distance to the current geographical vehicle position of the motor vehicle (13).

5. The monitoring device (2) according to claim 4, **characterized in that** the navigation device (4) is configured to select the potential target object (12) from a number of target objects, each of which meets a predetermined user criterion.

6. The monitoring device (2) according to claim 4 or 5, **characterized in that** the navigation device (4) is configured to retrieve a respective status value (17) of the potential target object (12) when the control signal (8) is received.

7. A motor vehicle (1) comprising a monitoring device (2) according to any one of the preceding claims.

8. A method for operating a monitoring device (2) for a motor vehicle (1), wherein
- a predetermined state of fatigue of a driver of the motor vehicle (7) is detected by a sensor device (3) of the monitoring device (2) by means of a recording of at least one predetermined body feature (5) of the driver and/or a predetermined motion characteristic (6) of the motor vehicle,
- a control signal (8) is sent to the navigation device (4) by the sensor device (3),
- a target object (14) intended for the state of fatigue is determined by the navigation device (4) when the control signal (8) is received, and
- a travel route (19) from a current geographical vehicle position of the motor vehicle (13) to a geographical target position of a target object (20) is calculated by the navigation device (4) and
- a warning signal (15) is output for at least one predetermined time period by the navigation device (4) when the control signal (8) is received, and
- a navigation mode for navigating along the travel route (19) is introduced by the navigation device (4), in the event of a predetermined user input (16) during the output of the warning signal (15).

## Revendications

1. Dispositif de surveillance (2) pour un véhicule automobile (1), comprenant un dispositif de capteur (3) et un appareil de navigation (4), dans lequel
- le dispositif de capteur (3) est conçu pour détecter un état de fatigue d'un conducteur du véhicule automobile (7) au moins d'une mesure d'au moins une caractéristique corporelle prédéterminée (5) du conducteur et/ou d'une caractéristique de mouvement prédéterminée (6) du véhicule automobile et dans lequel
- le dispositif de capteur (3) est conçu pour envoyer, lors de la détection de l'état de fatigue du conducteur du véhicule automobile (7), un signal de commande (8) à l'appareil de navigation (4) et
- l'appareil de navigation (4) est conçu pour déterminer, lors de la réception du signal de commande (8), un objet cible (14) prévu pour l'état de fatigue et pour calculer un itinéraire (19) d'une position géographique actuelle du véhicule automobile (13) vers une position géographique de destination de l'objet cible (20) prévu,
**caractérisé en ce que**
l'appareil de navigation (4) est conçu pour générer, après la réception du signal de commande (8) pendant au moins une période prédéterminée, un signal d'avertissement (15) et dans lequel
l'appareil de navigation (4) est conçu pour initier, lors d'une entrée d'utilisateur prédéterminée (16) pendant l'émission du signal d'avertissement (15), un mode de navigation pour la navigation le long de l'itinéraire (19).

2. Dispositif de surveillance (2) selon la revendication 1, **caractérisé en ce que** l'appareil de navigation (4) comprend un dispositif d'affichage (9) et est conçu pour afficher, après la réception du signal de commande (8), l'itinéraire (19) au moins pendant une période prédéterminée sur le dispositif d'affichage (9).

3. Dispositif de surveillance (2) selon la revendication 1 ou 2, **caractérisé en ce que**
l'appareil de navigation (4) est conçu pour terminer le mode de navigation lorsque l'appareil de navigation (4) détecte une manoeuvre de conduite prédéterminée et
dans lequel l'appareil de navigation termine le mode de navigation le long de l'itinéraire lorsque le véhicule automobile est passé devant l'objet cible.

4. Dispositif de surveillance (2) selon l'une des revendications précédentes, **caractérisé en ce que** l'appareil de navigation (4) est conçu pour détermine l'objet cible (14) prévu à partir d'une base de données d'objets (11), dans lequel
- la base de données d'objets (11) comprend des objets cibles potentiels (12) avec une position géographique de destination correspondante et
- la position géographique de destination de l'objet cible (20) prévu sélectionné dans celle-ci présente une distance minimale par rapport à la position géographique actuelle du véhicule automobile (13).

5. Dispositif de surveillance (2) selon la revendication 4, **caractérisé en ce que** l'appareil de navigation (4) est conçu pour sélectionner les objets cibles potentiels (12) parmi une quantité d'objets cibles qui remplissent chacun un critère prédéterminé par l'utilisateur.

6. Dispositif de surveillance (2) selon la revendication 4 ou 5, **caractérisé en ce que** l'appareil de navigation (4) est conçu pour appeler, lors de la réception du signal de commande (8), une valeur d'état (17) correspondante des objets cibles potentiels (12).

7. Véhicule automobile (1) comprenant un dispositif de surveillance (2) selon l'une des revendications précédentes.

8. Procédé de fonctionnement d'un dispositif de surveillance (2) pour un véhicule automobile (1), dans lequel
- un dispositif de capteur (3) du dispositif de surveillance (2) permet de détecter un état de fatigue prédéterminé d'un conducteur du véhicule automobile (7) au moyen d'une mesure d'au moins une caractéristique corporelle prédéterminée (5) du conducteur et/ou une caractéristique de déplacement prédéterminée (6) du véhicule automobile,
- le dispositif de capteur (3) envoie un signal de commande (8) à l'appareil de navigation (4),
- l'appareil de navigation (4) détermine, lors de la réception du signal de commande (8), un objet cible (14) prévu pour l'état de fatigue et
- l'appareil de navigation (4) calcule un itinéraire (19) d'une position géographique actuelle du véhicule automobile (13) vers une position géographique de destination d'un objet cible (20) et
- l'appareil de navigation (4) génère, lors de la réception du signal de commande (8) pendant au moins une période prédéterminée, un signal d'avertissement (15) et
- l'appareil de navigation (4) initie, lors d'une entrée prédéterminée par l'utilisateur (16), pendant l'émission du signal d'avertissement (15), un mode de navigation pour la navigation le long de l'itinéraire (19).
